# EUROPÄISCHE PATENTSCHRIFT

(11) **EP 1 379 597 B1**
(45) Veröffentlichungstag und Bekanntmachung des Hinweises auf die Patenterteilung: **11.08.2004**
(21) Anmeldenummer: 02730136.5
(22) Anmeldetag: 10.04.2002
(51) Int. Cl.: C09D 163/00, C09D 163/02, C09D 133/08

(54) **WÄSSRIGE BESCHICHTUNGSZUSAMMENSETZUNGEN AUF BASIS SELBST-DISPERGIERENDER EPOXIDHARZE**
AQUEOUS COATING COMPOSITIONS BASED ON SELF-DISPERSING EPOXY RESINS
COMPOSITIONS DE REVETEMENT AQUEUSES A BASE DE RESINES EPOXY AUTO-DISPERSIVES

(30) Priorität: 19.04.2001 DE 10119141
(43) Veröffentlichungstag der Anmeldung: 14.01.2004
(73) Patentinhaber: Cognis Deutschland GmbH & Co. KG, 40589 Düsseldorf (DE)
(72) Erfinder: HÖFER, Rainer, 40477 Düsseldorf (DE); NAGORNY, Ulrich, 40721 Hilden (DE)
(86) Internationale Anmeldenummer: PCT/EP2002/003981
(87) Internationale Veröffentlichungsnummer: WO 2002/085997

(56) Entgegenhaltungen:
- WO-A-00/04106
- US-A- 4 051 195
- US-A- 4 612 209

## Beschreibung

### Gebiet der Erfindung

Die Erfindung betrifft wäßrige Beschichtungszusammensetzungen mit einem Gehalt an härtbaren Komponenten, ein Verfahren zur Herstellung von Beschichtungen sowie die Verwendung der Beschichtungszusammensetzungen.

### Stand der Technik

**WO-A-00/04106** beschreibt Beschichtungs-Systeme enthaltend Wasser, Epoxidharz und Polyacrylate ("functional polyacrylate latex = echte Polymere"). Diese Systeme werden mit aminischen Härtern in Kontakt gebracht und ausgehärtet. Die so zugänglichen Beschichtungen sollen sich für Metalloberflächen, insbesondere Stahl, eignen, wobei diese Beschichtungen anschließend weiter mit Bitumen überzogen werden können.

**DE-A-195 04 528** beschreibt Amin-härtbare Zusammensetzung enthaltend ein teilweise acryliertes Epoxidharz, also eine Verbindung, in der in einem Molekül sowohl Epoxy- als auch (Meth)acrylat-Funktionalität vorhanden ist. Diese Zusammensetzungen sollen sich zur Herstellung von Coatings, insbesondere Fußbodenunterlagen eignen. Das acrylierte Harz ist ein teilacyliertes Epoxid-Monomer oder -Oligomer und hat ein Molgewicht von 150 - 10.000 und enthält mindestens eine Epoxidgruppe und mindestens eine terminale (Meth)acrylatgruppe. Der Härter ist ein Mono-, Di- oder Polyamin.

**US-A-4 051 195** beschreibt härtbare Zusammensetzungen enthaltend ein Epoxidharz (mit mehr als 1,2 Epoxygruppen pro Molekül) und einen Poly(meth)acrylatester eines Polyols, wobei dieser Ester >1 terminale (Meth)acrylsäuregruppe trägt. Die Härtung geschieht mit aliphatischen Polyaminen (mit mindetens 3 Amin-H-Atomen pro Molekül). Beispiele für den Polyolester sind: Hexandioldiacrylat, Trimethylolpropantriacrylat. Das beschriebene System ist praktisch wasserfrei und solvensfrei (in den Beispielen liegt der Wassergehalt laut Tabelle im Bereich von 0,1 bis 0,3%, der Solvensgehalt im Bereich von 0,04 bis 1,55%).

**US-A-3 383 434** beschreibt härtbare Zusammensetzung auf Basis von: Diepoxid, ungesättigtem Polyester und Polyamin (mit 2 primären Amingruppen). Die Härtung erfolgt bereits bei geringer Temperatur. Das Amin soll mit den C=C-Doppelbindungen der Polyester zu vemetzten Harzen reagieren. Die Systeme sollen eine kurze Gelzeit und geringe Exothermie aufweisen. Die Polyester leiten sich ab von aliphatischen Glykolen und ungesättigten aliphatischen Dicarbonsäuren.

**US-A-4 524 107** beschreibt Epoxidharz-Zusammensetzung auf Wasserbasis zur Imprägnierung von Fasern. Die Zusammensetzung stellt eine wäßrige Emulsion eines Epoxidharzes, eines Härters und eines Impact-Modifiers dar. Die Impact-Modifier sind Polymere, die in der Regel durch Emulsionspolymerisation hergestellt werden.

### Beschreibung der Erfindung

Aufgabe der vorliegenden Erfindung war es, härtbare Beschichtungszusammensetzungen auß wäßriger Basis bereitzustellen. Diese Zusammensetzungen sollten allenfalls einen geringen Gehalt an organischen Lösungsmitteln aufweisen, vorzugsweise jedoch frei sein von organischen Lösungsmitteln. Die Zusammensetzungen sollten sich ferner durch gute Handhabbarkeit und Applizierbarkeit (= Einarbeitbarkeit in anwendungstechnisch brauchbare Systeme) auszeichnen.

### Beschichtungs-Zusammensetzungen

Gegenstand der vorliegenden Erfindung sind wäßrige Beschichtungs-Zusammensetzungen mit einem Gehalt an härtbaren Komponenten bestehend aus
- A) 0,5 bis 90 Gew.-%: in Wasser selbstdispergierenden bei 20 °C festen Epoxidharzen,
- B) 0,5 bis 90 Gew.-%: (Meth)acrylsäureestern eines Polyols,
- C) 5,0 bis 99,0 Gew.-%: Wasser und
- D) 0 oder 0,1 bis 3 Gew.-%: organischer Lösungsmittel,
wobei folgende Maßgaben gelten:
- die (Meth)acrylsäureester B) enthalten mindestens 2 reaktionsfähige (Meth)acrylgruppen pro Molekül,
- die Summe der Gewichtsprozente der Komponenten A) bis D) ergibt 100 Gew.-% und
- die Viskosität der Zusammensetzung (gemessen nach Brookfield bei 23 °C) beträgt weniger als 15000 mPas.

### Zu Komponente A)

Bei **Komponente A)** der erfindungsgemäßen Beschichtungszusammensetzungen handelt es sich um selbstdispergierende bei 20 °C feste Epoxidharze. Umsetzungsprodukte von Bisphenol-A und/oder Bisphenol-F mit Epichlorhydrin fallen nicht unter die Definitinon der Komponente A). Unter dem Begriff "selbstdispergierend" ist - wie dem Fachmann bekannt - zu verstehen, daß die entsprechenden Verbindungen spontan, also ohne die Zuhilfenahme oder Mitwirkung spezieller Emulgatoren, Dispergatoren und dergleichen, zu Dispersionen bzw. Emulsionen führen, sobald sie mit Wasser in Kontakt gebracht werden.

Beispiele für geeignete Verbindungen A) sind Verbindungen, wie sie gemäß der Offenbarung der **WO-A-95/18165** durch Reaktion eines Epoxidharzes mit Mono-, Di-, oder Polyalkylenaminen bzw. gemäß **WO-A-96/20970** durch Reaktion eines Epoxidharzes mit polyfunktionellen Phenolen und Amin-Epoxidaddukten entstehen.

Geeignet als Verbindungen A) sind ebenso die folgenden Verbindungen:
- Zwischenprodukt Z5, das im Zuge der Herstellung der Härter vom Typ E2) anfällt (siehe unten im Abschnitt "Härter für das erfindungsgemäße Verfahren"),
- Zwischenprodukt Z7, das im Zuge der Herstellung der Härter vom Typ E3) anfällt (siehe unten im Abschnitt "Härter für das erfindungsgemäße Verfahren").

Als Beispiele für kommerziell verfügbare Verbindungen A) seien die Produkte Waterpoxy 1402, Waterpoxy 1422, Waterpoxy 1450 und Waterpoxy 1455 genannt, die von der Firma Cognis Deutschland GmbH bezogen werden können. Hierbei handelt es sich jeweils um wäßrige Angebotsformen. Ferner sind geeignet: Epi-Rez 5522 (Fa. Shell Chemicals / USA), Beckopox 385 (Fa. Solutia; Wien/Österreich).

In einer Ausführungsform setzt man Komponente A) in einer Menge von 5 bis 50 Gew.%, vorzugsweise von 20 bis 50 Gew.%, ein.

### Zu Komponente B)

Bei den Verbindungen B) handelt es sich um (Meth)acrylsäureester eines Polyols. Dabei gilt die Maßgabe, daß diese Verbindungen mindestens 2 reaktionsfähige (Meth)acrylguppen pro Molekül enthalten müssen.

Unter einer Acrylgruppe ist dabei eine Gruppe -O-CO-CH=CH₂ zu verstehen, unter einer Methacrylgruppe eine Gruppe -O-CO-C(CH₃)=CH₂

Die Komponenten B) sind in einfacher Weise dadurch erhältlich, daß man Polyole ganz oder teilweise mit Acrylsäure und/oder Methacrylsäure verestert.

Unter Polyolen, die sich zur Herstellung der Komponente B) eignen, werden dabei im Rahmen der vorliegenden Erfindung im weitesten Sinne alle organischen Verbindungen verstanden, die mindestens zwei OH-Gruppen pro Molekül enthalten. Die OH-Gruppen können dabei sowohl direkt an einem aliphatischen Rest angeknüpft sein, wie beispielsweise bei Alkandiolen (etwa Glykolen) oder Alkantriolen (etwa Glyverin oder Trimethylolpropan); sie können aber auch direkt an einem aromatischen Rest angeknüpft sein (wie etwa beim Bisphenol A).

Geeignete Verbindungen B) sind beispielsweise diejenigen, die auf Seite 5, Zeilen 45 bis 64, von **DE-A-195 04 528** offenbart sind.

Besonders bevorzugt sind als Verbindungen B):
- Ethylenglykoldi(meth)acrylat,
- 1,6-Hexandiol-di(meth)acrylat, Umsetzungsprodukte von Acrylsäure und/oder Methacrylsäure mit Anlagerungsprodukten von 1 bis 200 mol Ethylenoxid und/oder Propylenoxid an 1,6-Hexandiol.
- Trimethylolpropandi(meth)acrylat, Trimethylolpropantri(meth)acrylat, Umsetzungsprodukte von insgesamt 2 bis 3 mol Acrylsäure und/oder Methacrylsäure mit Anlagerungsprodukten von 1 bis 200 mol Ethylenoxid und/oder Propylenoxid an Trimethylolpropan
- Glycerindi(meth)acrylat, Glycerintri(meth)acrylat, Fettsäuremonoglyceriddi(meth)acrylat, acryliertes und/oder methacryliertes Sojaölepoxid, acryliertes und/oder methacryliertes Leinölepoxid, Umsetzungsprodukte von Acrylsäure und/oder Methacrylsäure mit Anlagerungsprodukten von 1 bis 200 mol Ethylenoxid und/oder Propylenoxid an Glycerin.
- Umsetzungsprodukte von Acrylsäure und/oder Methacrylsäure mit (Bisphenol A und/oder Bisphenol F)-Diglycidylether, Umsetzungsprodukte von Acrylsäure und/oder Methacrylsäure mit Anlagerungsprodukten von 1 bis 200 mol Ethylenoxid und/oder Propylenoxid an (Bisphenol A und/oder Bisphenol F)-Diglycidylether.
- Umsetzungsprodukte von Acrylsäure und/oder Methacrylsäure mit α,ω-Diolen, die erhältlich sind durch Umsetzung von 1 mol Bisphenol A (oder Bisphenol F) mit 2 mol Glycerin, anschließende Umsetzung des dabei erhaltenen terminale OH-Gruppen aufweisenden Diethers mit 2 mol Malein-, Glutar- oder Bernsteinsäureanhydrid, weitere Umsetzung des dabei erhaltenen terminale Carboxylatgruppen aufweisenden Zwischenproduktes mit 2 mol eines aliphatischen Diols (vorzugsweise eines Diols mit terminalen OH-Gruppen).

### Zu Komponente C)

Bei Komponente C) handelt es sich um Wasser, so daß sich weitere spezielle Erläutrungen erübrigen. In einer Ausführungsform beträgt die Menge an C) 10 bis 50 Gew.-% und insbesondere 35 bis 50 Gew.-%.

### Zu Komponente D)

Bei Komponente D) handelt es sich um Lösungsmittel. Hier kommen an sich alle dem Fachman einschlägig bekannten organischen Lösungsmittel in Betracht. Vorzugsweise setzt man solche Lösungsmittel ein, die dem Fachmann auf dem Gebiet der Beschichtungstechnologie bekannt sind. Beispiele geeigneter Lösungsmittel sind solche aus den Klassen der Mono-, Di- oder Polyalkohole, der Glykolester, der Glykolether; ferner aliphatische, cycloaliphatische und aromatische Kohlenwasserstoffe und schließlich Ketone.

### Herstellung der Beschichtungszusammensetzungen

Die Herstellung der Beschichtungszusammensetzungen kann auf jede dem Fachmann bekannte Weise erfolgen. Insbesondere können die Komponenten nacheinander miteinander vermischt werden. Es ist jedoch ebenso möglich, zwei oder mehrere Komponenten zunächst vorzukonfektionieren und in dieser Form mit weiteren Komponenten in Kontakt zu bringen, woraus dann die fertige Beschichtungszusammensetzung resultiert. Diese letztgenannte Variante gilt insbesondere für Komponente C) (=Wasser); Wasser kann auf unterschiedlichste Weise im Zuge der Herstellung der erfindungsgemäßen Beschichtungszusammensetzungen in das Gesamtsystem eingetragen werden; beispielsweise können insbesondere kommerziell verfügbare Verbindungen der Klassen A) und/oder B) in wäßriger Angebotsform eingesetzt werden. Wasser kann mit anderen Worten sowohl an sich mit den übrigen obligatorisch einzusetzenden Komponenten der Beschichtungszusammensetzung eingetragen werden, es kann jedoch auch in der Weise eingetragen werden, daß man einzelnen oder alle Komponenten A) und/oder B) in wäßriger Angebotsform einsetzt; auch eine Kombination beider Wege ist möglich.

Die Gew.-%-Angaben für die Komponenten A) und B) beziehen sich im übrigen stets auf den jeweiligen Wirkstoffgehalt. Wenn beispielsweise eine Beschichtungszusammensetzung hergestellt wird, indem ein oder mehrere Komponenten in wäßriger Angebotsform eingesetzt werden, dann ist im Hinblick auf die Charakterisierung der Zusammensetzung der gesamten Beschichtungszusammensetzung für die einzelnen Komponenten jeweils maßgebend, wieviel Wirksubstanz jeweils vorliegt und nicht, ob im Zuge der Herstellung der Beschichtungszusammensetzung bestimmte Komponenten wasserfrei oder wasserhaltig eingesetzt wurden; der Anteil an Komponente C), also Wasser, ergibt sich dementsprechend in jedem Fall als die Summe des in der gesamten Beschichtungszusammensetzung vorhandenen Wassers.

Wie oben ausgeführt sind im Hinblick auf Komponente A) Umsetzungsprodukte von Bisphenol-A und/oder Bisphenol-F mit Epichlorhydrin ausgenommen. Es sei in diesem Zusammenhang ausdrücklich darauf hingewiesen, daß sich diese Einschränkung ausschließlich auf die direkten Umsetzungsprodukte von Bisphenol-A und/oder Bisphenol-F mit Epichlorhydrin bezieht. Nicht ausgenommen sind natürlich Folgeprodukte von direkten Umsetzungsprodukten von Bisphenol-A und/oder Bisphenol-F mit Epichlorhydrin, da es sich bei diesen Folgeprodukten um andere Substanzklassen, also chemisch andersartige Verbindungen handelt.

Es sei ausdrücklich angemerkt, daß die Komponenten A), B) und D) jeweils als einzelne Spezies oder als Gemische solcher Spezies eingesetzt werden können. Es können also jeweils sowohl ein als auch mehrere Epoxidharze A), (Meth)acrylsäureester B) bzw. Lösungsmittel D) eingesetzt werden.

In einer Ausführungsform beträgt die Wasserlöslichkeit der Komponente B) weniger als 0,1 g/l.

Die erfindungsgemäßen Beschichtungs-Zusammensetzungen sind härtbare Zusammensetzungen. Eine Härtung kann dabei an sich nach allen dem Fachmann einschlägig bekannten Methoden durchgeführt werden. Insbesondere kann auf Grund des Gehalts der erfindungsgemäßen Zusammensetzungen an Komponente B), die C=C-Doppelbindungen enthält, eine Strahlungshärtung (z.B. UV-Härtung) zum Einsatz kommen. Es kann auch gewünscht sein, übliche Epoxidharzhärter einzusetzen. In einer Ausführungsform kombiniert man Strahlungshärtung und Härtung durch Zusatz eines Epoxidharzhärters.

### Beschichtungsverfahren

Ein weiterer Gegenstand der Erfindung ist ein Verfahren zur Herstellung von Beschichtungen, wobei man eine Zusammensetzung bestehend aus
- A) 0,5 bis 90 Gew.-%: in Wasser selbstdispergierenden bei 20 °C festen Epoxidharzen,
- B) 0,5 bis 90 Gew.-%: (Meth)acrylsäureestern eines Polyols,
- C) 5,0 bis 99,0 Gew.-%: Wasser und
- D) 0 oder 0,1 bis 3 Gew.-%: organischer Lösungsmittel,
wobei folgende Maßgaben gelten:
- die (Meth)acrylsäureester B) enthalten mindestens 2 reaktionsfähige (Meth)acrylgruppen pro Molekül,
- die Summe der Gewichtsprozente der Komponenten A) bis D) ergibt 100 Gew.-% und
- die Viskosität der Zusammensetzung (gemessen nach Brookfield bei 23°C) beträgt weniger als 15000 mPas,
mit
- E) 1 bis 200 Gew.-%: wasserverdünnbaren Härtern - Gew.-% Härter bezogen auf die Epoxidharze A) - und
- F) 0 bis 90 Gew.-%: weiterer Zusatzstoffe und/oder Verarbeitungshilfsmittel - Gew.-% der Komponente F) bezogen auf die Gesamtmenge der Komponenten A) bis F) -,
in Kontakt bringt, die Mischung in die gewünschte Form bringt und aushärten läßt.

### Härter für das erfindungsgemäße Verfahren

Im erfindungsgemäßen Verfahren werden als **Komponente E)** wasserverdünnbare Härter eingesetzt. Bei der Auswahl eines Härters kann man im Prinzip auf alle dem Fachmann einschlägig bekannten Epoxidharzhärter zurückgreifen. Beispiele für geeignete Epoxidharzhärter sind funktionelle Aminverbindungen, funktionelle Phenolharze, funktionelle Mercaptane, funktionelle Anhydride oder Carbonsäuren, die wenigstens eine funktionelle Gruppe enthalten, vorzugsweise jedoch mehrere solcher Gruppen. Die hier angesprochenen als Epoxidharzhärter geeigneten Verbindungen sind dem Fachmann bekannt.

Vorzugsweise setzt man im Rahmen des erfindungsgemäßen Verfahrens als Komponente E) polyfunktionelle Aminverbindungen ein, die eine Aushärtung bei moderaten Temperaturen gestatten. Beispiele geeigneter Verbindungen dieser Klasse sind in der eingangs zitierten Offenlegungsschrift WO 00/04106 genannt (vergleiche dort Seite 3, Zeile 10 bis Seite 4, Zeile 12); die dort genannten Verbindungen werden in die Offenbarung der vorliegenden Erfindung ausdrücklich mit einbezogen.

In einer Ausführungsform werden als Komponente E) Verbindungen eingesetzt, die sich von Addukten auf Basis α,β-ungesättigter Carbonsäureester und Mono-, Dioder Polyaminopolyalkylenoxid-Verbindungen ableiten. Insbesondere werden die Verbindungen E) ausgewählt aus der Gruppe der unten näher beschriebenen Typen E1) bis E3).

**Härter vom Typ E1)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, in Gegenwart eines Umesterungskatalysators mit
(b) ein oder mehreren Hydroxyverbindungen umsetzt, wobei man die Verbindungen (a) und (b) in solchen Mengen einsetzt, daß das Äquivalentverhältnis der Hydroxylgruppen in (b) zu den Estergruppen COOR¹ in den α,β-ungesättigten Carbonsäureestern (a) im Bereich von 1,5:1 bis 10: 1 liegt,
   das hierbei erhaltene Zwischenprodukt Z1 mit
(c) ein oder mehreren Mono-, Di- oder Polyaminopolyalkylenoxid-Verbindungen umsetzt, wobei man ein Äquivalentverhältnis der reaktiven H-Atome an den Aminostickstoffatomen von (c) zu den Estergruppen in der Zwischenverbindung Z1 im Bereich von 10:1 bis 1:10 einstellt,
   das hierbei erhaltene Zwischenprodukt Z2 anschließend mit
(d) ein oder mehreren Polyepoxiden umsetzt, wobei man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 100 : 1 und 1,5 : 1 einstellt
   und das hierbei erhaltene Zwischenprodukt Z3 anschließend mit
(e) ein oder mehreren primären und/oder sekundären Aminen umsetzt, wobei man das Äquivalentverhältnis von Oxiranringen in Zwischenprodukt Z3 zu den reaktiven H-Atomen an den Aminostickstoffatomen von (e) auf einen Wert im Bereich von 1 : 1,5 bis 1 : 20 einstellt.

Die erfindungsgemäß einzusetzenden Härter stellen je nach ihrem Molekulargewicht entweder flüssige oder feste Substanzen dar.

Der Ausdruck "Äquivalentverhältnis" ist dem Fachmann geläufig. Der grundlegende Gedanke hinter dem Begriff des Äquivalents ist der, daß man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, daß unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, daß zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so daß die funktionelle Gruppe NH₂ zwei reaktive Gruppen, nämlich die Wasserstoffatome, aufweist.

In einer Ausführungsform setzt man die Zwischenverbindung Z1 und die Verbindung (c) in solchen Mengen ein, daß das Äquivalentverhältnis der reaktiven H-Atome an den Aminostickstoffatomen von (c) zu den Estergruppen in der Zwischenverbindung Z1 im Bereich von 4 : 1 bis 1 : 4 und insbesondere von 2,5 : 1 bis 1,5 : 1 liegt.

In einer Ausführungsform stellt man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 50:1 bis 10:1 ein.

Beispiele für die erfindungsgemäß einzusetzenden **α,β-ungesättigten Carbonsäu reester (a)** der oben genannten Struktur (I) sind Acrylsäuremethylester, Acrylsäureethylester, Maleinsäuredimethylester, Maleinsäurediethylester, Fumarsäuredimethylester, Fumarsäurediethylester, Itaconsäuredimethylester, Itaconsäurediethylester. Besonders bevorzugt sind dabei als Verbindungen (a) Maleinsäuredialkylester, insbesondere Maleinsäurediethylester und Maleinsäuredimethylester.

**Die Hydroxyverbindungen (b)** können aliphatisch oder aromatisch sein. Die Verbindungen (b) sollten inert gegenüber Umesterungskatalysatoren sein.

Beispiele für geeignete **aromatische Verbindungen (b)** sind: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungsund Bromierungsprodukte der vorstehend genannten Verbindungen. Bisphenol A ist als aromatische Verbindung (b) bevorzugt.

In einer bevorzugten Ausführungsform wählt man die Hydroxyverbindungen (b) aus der Klasse der Fettalkohole, Alkandiole und Polyetherdiole. Gewünschtenfalls können diese Verbindungen auch alkoxyliert sein.

Bei den **Fettalkoholen** handelt es sich um primäre Alkohole mit 6 bis 36 C-Atomen, die gesättigt oder olefinisch ungesättigt sein können. Beispiele für geeignete Fettalkohole sind Hexanol, Heptanol, Octanol, Pelargonalkohol, Decanol, Undecanol, Laurylalkohol, Tridecanol, Myristinalkohol, Pentadecanol, Palmitylalkohol, Heptadecanol, Stearylalkohol, Nonadecanol, Arachidylalkohol, Heneicosanol, Behenylalkohol, Tricosanol, Lignocerylalkohol, 10-Undecanol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol.

Bei den **Alkandiolen** handelt es sich um Verbindungen der allgemeinen Struktur HOCH₂-R⁵-CH₂OH, worin der Rest R⁵ ein hydrophober Kohlenwasserstoffrest ist, der gesättigt oder ungesättigt, geradkettig oder verzweigt sein kann und gegebenenfalls auch aromatische Strukturelemente enthalten kann. Beispiele sind 1,6-Hexandiol, 1,7-Heptandiol und 1,8-Octandiol, ferner Polyoxytetramethylendiole - auch als Polytetrahydrofurane bekannt - sowie die sogenannten Dimerdiole. Die Dimerdiole sind im Rahmen der vorliegenden Erfindung ganz besonders bevorzugt.

**Dimerdiole** sind seit langem bekannte und im Handel erhältliche Verbindungen, die beispielsweise durch Reduktion von Dimerfettsäureestem gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert: **Fette & Öle 26 (1994), Seiten 47-51; Speciality Chemicals 1984 (Mai-Heft), Seiten 17,18, 22-24.** Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden: **Fat Sci. Technol. 95 (1993) Nr.3, Seiten 91 - 94.** Im Rahmen der vorliegenden Erfindung sind diejenigen Dimerdiole bevorzugt, die einen Dimergehalt von mindestens 50% und insbesondere 75% aufweisen und bei denen die Zahl der C-Atome pro Dimermolekül überwiegend im Bereich von 36 bis 44 liegt.

Unter **Polyetherdiolen** werden im Rahmen der vorliegenden Erfindung Diole der allgemeinen Struktur HOCH₂-R⁶-CH₂OH verstanden, worin der Rest R⁶ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch ein Sauerstoffatom ersetzt sind.

Eine besonders attraktive Klasse von Polyetherdiolen ist durch Alkoxylierung von Alkandiolen wie 1,2-Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol, Polyoxytetramethylendiolen (Polytetrahydrofuranen) und Dimerdiolen zugänglich. Bei der Herstellung dieser alkoxylierten Diole geht man üblicherweise wie folgt vor: In einem ersten Schritt bringt man das gewünschte Diol mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) an das eingesetzte Diol erhalten. Bei den Additionsprodukten handelt es sich mithin um EO-Addukte oder um PO-Addukte oder um EO/PO-Addukte an das jeweilige Diol; bei den EO/PO-Addukten kann dabei die Anlagerung von EO und PO statistisch oder blockweise erfolgen.

Als **Umesterungskatalysatoren** kommen für die Umsetzung der Verbindungen (a) und (b) an sich alle dem Fachmann aus dem Stand der Technik bekannten Umesterungskatalysatoren in Frage. Beispiele für geeignete Katalysatoren sind Natriummethylat, Dibutylzinndiacetat, Tetraisopropylorthotitanat. Die Katalysatoren können nach der Umesterung gewünschtenfalls deaktiviert werden, dies ist jedoch nicht zwingend erforderlich.

Als **Aminokomponenten (c)** dienen Mono-, Di- oder Polyaminopolyalkylenoxid-Verbindungen. Darunter ist zu verstehen, daß diese Verbindungen einerseits ein, zwei oder mehrere Amino-Funktionen (NH- bzw. NH₂-Funktionen), andererseits Alkylenoxid-Bausteine enthalten. Bei den letztgenannten Bausteinen handelt es sich insbesondere um Ethylenoxid, Propylenoxid und Butylenoxid, wobei Ethylenoxid und Propylenoxid besonders bevorzugt sind. Die Verbindungen (c) sind zumindest teilweise bei 20 °C in Wasser lösliche Substanzen.

Die Herstellung der Verbindungen (c) ist aus dem Stand der Technik bekannt und schließt die Umsetzung von Hydroxylgruppen-enthaltenden Verbindungen mit Alkylenoxiden ein, nebst anschließender Umwandlung der resultierenden terminalen Hydroxylgruppen in Aminogruppen.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

In einer Ausführungsform setzt man als Verbindungen (c) Substanzen der allgemeinen Struktur R⁸-O-R⁹-CH₂CH(R¹⁰)-NH₂ ein. Darin bedeuten:
- R⁸ eine einwertige organische Gruppe mit 1-12 C-Atomen, die aliphatisch, cycloaliphatisch oder aromatisch sein kann
- R⁹ eine Polyoxyalkylengruppe, die aus 5-200 Polyoxyalkyleneinheiten, insbesondere EO- und/oder PO-Einheiten, aufgebaut ist
- R¹⁰ Wasserstoff oder ein aliphatischer Rest mit bis zu 4 C-Atomen.

Besonders geeignete Vertreter der Verbindungen (c) sind im Rahmen der vorliegenden Erfindung die dem Fachmann bekannten "Jeffamine" , bei denen es sich um handelsübliche Substanzen handelt. Beispielhaft sei hier "Jeffamin 2070" genannt, das nach Angaben der Firma Texaco durch Umsetzung von Methanol mit Ethylenoxid und Propylenoxid nebst Umwandlung der terminalen Hydroxylgruppen des zunächst erhaltenen Zwischenproduktes in Amingruppen hergestellt wird (vergleiche **WO 96/20971**, Seite 10, Zeilen 12-15).

Die Verbindungen (c) haben vorzugsweise mittlere Molekulargewichte (Zahlenmittel; Mn) im Bereich von 148 bis 5000, insbesondere zwischen 400 und 2000.

Bei den **Epoxidverbindungen (d)** handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyloder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen -160 und 500, insbesondere zwischen 170 und 250. Das Epoxidäquivalentgewicht einer Substanz ist dabei als diejenige Menge der Substanz (in Gramm) definiert, welche 1 mol Oxiranringe enthält.
Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungsund Bromierungsprodukte der vorstehend genannten Verbindungen; Bisphenol A ist dabei ganz besonderes bevorzugt.

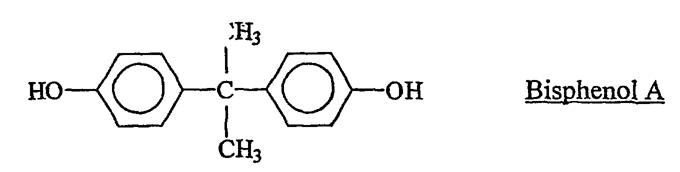

Auch die Polyglycidylether von mehrwertigen Alkoholen sind als Verbindungen (d) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Verbindungen (d) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen (d) findet sich in:
- **A.M. Paquin, Handbuch "Epoxidverbindungen und Epoxidharze",** Springer-Verlag, Berlin 1958, Kapitel V, Seiten 308 bis 461; ferner in:

- **Lee, Neville "Handbook of Epoxy Resins",** 1967, Kapitel 2, Seiten 2-1 bis 2-33.

Es können auch Mischungen von mehreren Epoxidverbindungen (d) verwendet werden.

Als **Amine (e)** kommen im Rahmen der vorliegenden Erfindung primäre und/oder sekundäre Amine zum Einsatz. Vorzugsweise setzt man als Amine (e) Polyamine mit mindestens zwei Stickstoffatomen und mindestens zwei aktiven Amino-Wasserstoffatomen pro Molekül ein. Es können aliphatische, aromatische, aliphatisch-aromatische, cycloaliphatische und heterocyclische Di- und Polyamine benutzt werden.

Beispiele für geeignete Amine (e) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, die Mischung der über eine Methylenbrücke verknüpften Poly(cyclohexyl-aromischen)amine (auch als MBPCAA bekannt) und und Polyaminoamide.
Des weiteren kommen als Verbindungen (e) auch die Reaktionsprodukte der Umsetzung der gerade genannten Amine mit den oben beschriebenen α,β-ungesättigten Carbonsäureestern (a) in Frage, ferner die Reaktionsprodukte der Umsetzung gerade genannten Amine mit den oben beschriebenen Polyepoxidverbindungen (d).

**Härter vom Typ E2)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(c) ein oder mehreren Mono-, Di- oder Polyaminopolyalkylenoxid-Verbindungen umsetzt, wobei man die Verbindungen (a) und (c) in solchen Mengen einsetzt, daß das Äquivalentverhältnis der reaktiven H-Atome an den Aminostickstoffatomen von (c) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
   das hierbei erhaltene Zwischenprodukt Z4 anschließend mit
(d) ein oder mehreren Polyepoxiden umsetzt, wobei man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 100 : 1 und 1,5 : 1 einstellt
   und das hierbei erhaltene Zwischenprodukt Z5 anschließend mit
(e) ein oder mehreren primären und/oder sekundären Aminen umsetzt, wobei man das Äquivalentverhältnis von Oxiranringen in Zwischenprodukt Z5 zu den reaktiven H-Atomen an den Aminostickstoffatomen von (e) auf einen Wert im Bereich von 1 : 1,5 bis 1 : 20 einstellt.

Für die Substanzen (a) sowie die Substanzen (c) bis (e) gilt ansonsten das oben - für Härter vom Typ E1) - Gesagte.

Härter vom Typ E3) sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(c) ein oder mehreren Mono-, Di- oder Polyaminopolyalkylenoxid-Verbindungen umsetzt, wobei man die Verbindungen (a) und (c) in solchen Mengen einsetzt, daß das Äquivalentverhältnis der reaktiven H-Atome an den Aminostickstoffatomen von (c) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
   das dabei zunächst erhaltene Zwischenprodukt Z4 anschließend mit
(g) ein oder mehreren Polyhydroxyverbindungen umsetzt, wobei man das Äquivalentverhältnis von Estergruppen in Zwischenverbindung Z4 zu Hydroxygruppen in Polyhydroxyverbindung (g) auf einen Wert im Bereich von 1 : 1,1 bis 1 : 10 einstellt
   und das hierbei erhaltene Zwischenprodukt Z6 anschließend mit
(d) ein oder mehreren Polyepoxiden umsetzt, wobei man das Äquivalentverhältnis von Oxiranringen in Polyepoxid (d) zu Hydroxylgruppen in Zwischenprodukt Z6 auf einen Wert im Bereich von 1,5 : 1 und 6 : 1 einstellt
   und das hierbei erhaltene Zwischenprodukt Z7 anschließend mit
(e) ein oder mehreren primären und/oder sekundären Aminen umsetzt, wobei man das Äquivalentverhältnis von Oxiranringen in Zwischenprodukt Z7 zu den reaktiven H-Atomen an den Aminostickstoffatomen von (e) auf einen Wert im Bereich von 1 : 1,5 bis 1 : 20 einstellt.

Für die Substanzen (a) und die Substanzen (c) bis (e) gilt ansonsten das oben - für Härter vom Typ E1) - Gesagte.

Die Polyhydroxyverbindungen (g) können aliphatisch oder aromatisch sein. In einer Ausführungsform wählt man die Polyhydroxyverbindungen (g) aus der Klasse spezieller aliphatischer Diole und zwar der Alkandiole - insbesondere der Dimerdiole - Polyetherdiole und Polyesterdiole. Für die Alkandiole - einschließlich der Dimerdiole - und die Polyetherdiole gilt das oben - für Härter vom Typ E1) in Bezug auf Komponente (b) - Gesagte. Für die Polyesterdiole gilt folgendes: Unter Polyester**diolen** werden im Rahmen der vorliegenden Erfindung Diole der allgemeinen Struktur HOCH₂-R⁷-CH₂OH verstanden, worin der Rest R⁷ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch eine COO-Einheit ersetzt sind. Zur Herstellung werden üblicherweise difunktionelle Polyole mit Dicarbonsäuren oder deren Anhydriden umgesetzt. Häufig verwendete Polyole sind Ethylenglykol, 1,2-Propandiol, 1,4-Butandiol, 1,6-Hexandiol. Übliche Dicarbonsäuren sind Bernsteinsäure, Adipinsäure, Phthalsäureanhydrid. Besonders bevorzugt sind dabei 1,6-Hexandiol-Adipinsäurepolyester.

Weiterhin können als Härter E) sogenannte Polyetheramine E4) eingesetzt werden. Diese Verbindungen werden nachfolgend auch als **Härter vom Typ E4)** bezeichnet. Als **Polyetheramine** (PEA) dienen im Rahmen der vorliegenden Erfindung Dioder Polyaminopolyalkylenoxid-Verbindungen. Darunter ist zu verstehen, daß diese Verbindungen einerseits zwei oder mehrere Amino-Funktionen (NH- bzw. NH₂-Funktionen), andererseits Alkylenoxid-Bausteine enthalten. Bei den letztgenannten Bausteinen handelt es sich insbesondere um Ethylenoxid, Propylenoxid und Butylenoxid, wobei Ethylenoxid und Propylenoxid besonders bevorzugt sind.

Die Herstellung von Polyetheraminen ist aus dem Stand der Technik bekannt und schließt die Umsetzung von Hydroxylgruppen-enthaltenden Verbindungen mit Alkylenoxiden ein, nebst anschließender Umwandlung der resultierenden terminalen Hydroxylgruppen in Aminogruppen. Auf entsprechenden Stand der Technik verweist **WO-A-97/03108** (vergleiche dort Seite 8, Zeilen 13-19) und stellt fest, daß Polyetheramine üblicherweise durch Aminierung von Polyethern mit Ammoniak in Gegenwart von Katalysatoren wie beispielsweise Ni/Cu/Cr hergestellt werden.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

Geeignete Polyetherblöcke der Polyetheramine sind etwa Polyethylenglykole, Polypropylenglykole, Copolymere von etwa Polyethylenglykolen und Polypropylenglykolen, Poly(1,2-butylen)glykole, Poly(tetramethylen)glykole.

Besonders bevorzugt als Polyetheramine E4) sind Diamine und Triamine. Unter "Diaminen und Triaminen" sind dabei solche Polyetheramine zu verstehen, die zwei bzw. drei endständige (terminale) NH₂-Gruppen pro Molekül aufweisen. Ganz besonders bevorzugt sind dabei die in den Dokumenten **EP-B-634 424** und **WO-A-97/03108** beschriebenen Diamine und Triamine. Die Offenbarung dieser beiden Schriften bezüglich der Struktur dieser Diamine und Triamine wird hiermit ausdrücklich in die Lehre der vorliegenden Erfindung einbezogen. Insbesondere wird auf folgende Textstellen Bezug genommen:
- Bezüglich EP-B-634 424: Seite 6, Zeile 23 bis Seite 7, Zeile 36.
- Bezüglich WO-A-97/03108: Seite 29, Zeile 1 bis Seite 31, letzte Zeile.

Besonders geeignete Diamine und Triamine (vom PEA-Typ) sind im Rahmen der vorliegenden Erfindung solche, die unter der Handelsbezeichnung **"Jeffamine**" von der Firma Huntsman Petrochemical Corporation kommerziell angeboten werden. Im Rahmen der vorliegenden Erfindung sind dabei folgende Typen besonders bevorzugt:
- Jeffamine D-400
- Jeffamine D-2000
- Jeffamine D-4000
- Jeffamine ED-600
- Jeffamine ED-900
- Jeffamine ED-2001
- Jeffamine ED-4000
- Jeffamine ED-6000
- Jeffamine T-3000
- Jeffamine T-5000
- Jeffamine ET-3000

Diese Jeffamine-Typen können einzeln oder im Gemisch miteinander eingesetzt werden.

Die Polyetheramine E4) haben vorzugsweise mittlere Molekulargewichte (Zahlenmittel; Mn) im Bereich von 400 bis 12000, insbesondere zwischen 400 und 6000.

Geeignet als Polyetheramine E4) sind auch die dem Fachmann bekannten kommerziell verfügbaren "Pluronic"-Typen (Hersteller: BASF) sowie die "PC-Amine" (Hersteller: Fa. Nitroil).

### Zusatzstoffe und Verarbeitungshilfsmittel

Im Zuge des erfindungsgemäßen Verfahrens können als **Komponente F)** dem Fachmann einschlägig bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

Als von besonderem Interesse seien ausdrücklich erwähnt:
- Füllstoffe (als Komponente F1) bezeichnet),
- Offenzeitverlängerer (als Komponente F2) bezeichnet,
- Rheologieadditive (als Komponente F3) bezeichnet.

**Füllstoffe F1)** dienen unter anderem zur Verbilligung der Basisrezeptur, zur Erzielung spezieller Oberflächeneffekte sowie zur Steuerung der Rheologie eines Systems.
Die Kombination der Füllstoffe hat einen entscheidenen Einfluß auf die Lagerstabilität sowie auf die chemische Beständigkeit der fertigen Beschichtung. Naturgemäß zeigen Calciumcarbonate bei dieser Anwendung geringere chemische Stabilitäten gegen sauer reagierende Chemikalien.
Sand, ein wichtiger Füllstoff zur Erzielung der notwendigen Schichtstärken, scheidet aufgrund seiner groben Teilchenstruktur, im Vergleich zu herkömmlichen Füllstoffen, als alleiniges Füllmaterial aus. Die Kombination mit anderen inerten Zuschlagsstoffen reduziert dieses Verhalten nur zu einem geringen Anteil, kann das schlechte Absetzverhalten aber nicht kompensieren, wenn gute Applikationseigenschaften gleichzeitig beibehalten werden sollen. Der Einsatz der Füllstoffe ist aber unverzichtbar um besondere Oberflächeneffekte zu erzielen. Der Glanzgrad und der Preis einer Beschichtung sowie die schon erwähnte chemische Beständigkeit sind abhängige Faktoren, die an den Einsatz einer richtigen Füllstoffkombination gebunden sind.

Die zum Einsatz kommenden Füllstoffe sind von unterschiedlicher chemischer Natur. Es können beispielsweise Bariumsulfate, Quarzmehle, Aluminiumsilikate, natürliche oder synthetische Calciumcarbonate, Silikate, Calciumsulfat, Talkum, Kaolin, Glimmer, Feldspat, Metalle und Metalloxide, Aluminiumhydroxid, Ruß, Graphit und weitere, dem Fachmann einschlägig bekannte Füllstoffe eingesetzt werden.

Geeignete Füllstoffe besitzen insbesondere ein spezifisches Gewicht von 2-3 g/cm³, vorzugsweise 2,4-2,7 g/cm³. Die Schüttdichte liegt insbesondere zwischen 0,6-1,0 g/cm³.

Zur Vermeidung von Absetzproblemen und zur Einstellung der wichtigen Verarbeitungsviskosität kommen insbesondere Füllstoff mit Komverteilungen von 0-100 µm, vorzugsweise 0-50 µm, zum Einsatz. Die Komverteilung ist eine Verteilungsfunktion der Partikelgrössen. Die Bestimmung erfolgt mittels Partikelgrössenanalyse, die Darstellung in einer Partikelgrössenverteilungskurve (z.B. Komverteilungskurve durch Siebanalyse nach DIN 66165-1: 1097-04).

Ganz besonders eignen sich als Komponente F1) folgende Kombinationen: Quarzsand/Minex S 20, Quarzsand/Schwerspat C 14 oder Quarzsand/Calcicoll W 7. Die hier aufgeführten Substanzen sind kommerziell erhältlich.

In einer Ausführungsform setzt man Komponente F1) in einer Menge von 20 bis 60 Gew.% ein.

**Offenzeitverlängerer F2)** auf Wachsbasis. Derartige Systeme sind dem Fachmann bekannt, (zum Begriff der Wachse siehe zum Beispiel **U. Zorll, Hrsg., *RÖMPP*** - ***Lexikon, Lacke und Druckfarben*, *s.* 615, Georg Thieme Verl., Stuttgart, New York, 1998).** Zur Verlängerung der Offenzeit, zur Erhöhung von Geschmeidigkeit und Plastizität der Füll- und Dämmassen werden nämlich bei der Verarbeitung Wachse in Form wäßriger Emulsionen oder in fester Angebotsform auf mineralische Trägermaterialien eingesetzt. Dabei sind unter dem Begriff Wachse sowohl die Wachse im engeren Sinne als auch Fettalkohole zu verstehen.

**In R. Neumann, H.-G. Schulte, R. Höfer, *Pulver, das Eigenschaften schafft*, Bautenschutz und Bausanierung, Heft 3/1999, S. 22-27** sowie in **U. Nagorny, *Extension of workability of synthetic resin plasters with additives based on fatty raw materials*; ConChem-Journal, Nr. 1/1994, S. 23-26)** sind solche Verarbeitungsadditive auf Wachsbasis eingehend beschrieben. Insbesondere eignen sich pulverförmige Darreichungsformen von Offenzeitverlängerern auf Wachsbasis, insbesondere auf einen festen Träger aufgezogene Fettalkohole mit 16 bis 72 C-Atomen pro Molekül. In diesem Zusammenhang sei ausdrücklich auf die Offenbarung der **WO 98/49114** verwiesen.
Besonders geeignete Offenzeitverlängerer auf Wachsbasis sind die kommerziell von der Cognis Deutschland GmbH, Düsseldorf/DE vertriebenen Produkte Loxanol® 842 DP (wäßrige Dispersion) und Loxanol® P (wasserfreier, pulverförmiger Feststoff).

In einer Ausführungsform setzt man Komponente F2) in einer Menge von 0,1 bis 2,0 Gew.% ein.

**Rheologieadditive F3).** Hier lassen sich an sich alle dem Fachmann einschlägig bekannten Rheologieadditive einsetzen, vorzugsweise Schichtsilikate oder Poly(meth)acrylate oder Celluloseether oder sogenannte assoziative Verdickungsmittel allein oder in Kombination.

Bevorzugt sind Schichtsilikate in Kombination mit hydrophob modifizierten Polyetherurethanen (HEUR) oder hydrophob modifizierten Polyethern (HMPE). Unter hydrophober Modifikation ist dabei zu verstehen, daß hydrophobe Gruppen in den Molekülen der genannten Substanzklassen enthalten sind. Besonders bevorzugte HEUR sind die in G. Schulte, J. Schmitz, R. Höfer, ***Additive für wäßrige Systeme und umweltfreundliche Lacke,*** Welt der Farben, 28 - 31 (12/1997) beschriebenen lösemittelfreien HEUR und die in **DE-A-42 42687** beschriebenen pseudoplastischen HEUR.

In einer Ausführungsform setzt man Komponente F3) in einer Menge von 0,1 bis 3,0 Gew.% ein.

### Verwendung

Ein weiterer Erfindungsgegenstand ist die Verwendung von Zusammensetzungen bestehend aus
- A) 0,5 bis 90 Gew.-%: in Wasser selbstdispergierenden bei 20 °C festen Epoxidharzen,
- B) 0,5 bis 90 Gew.-%: (Meth)acrylsäureestern eines Polyols,
- C) 5,0 bis 99,0 Gew.-%: Wasser und
- D) 0 oder 0,1 bis 3 Gew.-%: organischer Lösungsmittel,
wobei folgende Maßgaben gelten:
- die (Meth)acrylsäureester B) enthalten mindestens 2 reaktionsfähige (Meth)acrylgruppen pro Molekül,
- die Summe der Gewichtsprozente der Komponenten A) bis D) ergibt 100 Gew.-% und
- die Viskosität der Zusammensetzung (gemessen nach Brookfield bei 23 °C) beträgt weniger als 15000 mPas,
zur Herstellung von Beschichtungen.

Ein weiterer Gegenstand der Erfindung ist die Verwendung der oben beschriebenen Beschichtungszusammensetzungen als Ausgleichs- und Dämmassen, insbesondere im Bausektor. Dabei ist der Einsatz für Fußböden besonders bevorzugt.

### Beispiele

### Eingesetzte Substanzen

Waterpoxy 1422: Selbstdispergierendes Epoxidharz (54 Gew.-%-ig in Wasser/Ethoxypropanaol; Hersteller: Cognis Deutschland GmbH)
Photomer 4017: Hexandioldiacrylat (Hersteller: Cognis Deutschland GmbH)
Waterpoxy 751: Epoxidharzhärter (Hersteller: Cognis Deutschland GmbH)
Foamaster TCX: Entschäumer (Hersteller: Cognis Deutschland GmbH)
Hydropalat 5300: Dispergieradditiv (Hersteller: Cognis Deutschland GmbH)

### Wäßrige Beschichtungs-Zusammensetzungen

### Beispiel 1 (erfindungsgemäß)

Man stellte folgende Zusammensetzung durch Zusammengeben der einzelnen Komponenten und Rühren her:
- 100 Gewichtsteile Waterpoxy 1422
- 13,1 Gewichtsteile Photomer 4017
Ausdrücklich sei erwähnt, daß 35 Gew.-% Wasser im System vorhanden sind, weil es durch Waterpoxy 1422 eingetragen wurde.

### Anwendungsbeispiele

### Beispiel 2 (erfindungsgemäß)

Zu 100 Gewichtsteilen der Zusammensetzung gemäß Beispiel 1 fügte man 19 Gewichtsteile Waterpoxy 751. Die Mischung wurde auf einen metallischen Untergrund in einer Schichtdicke von 30 µm aufgetragen und man ließ aushärten.

### Beispiel 3 (erfindungsgemäß)

Zu 53,0 Gewichtsteilen der Zusammensetzung gemäß Beispiel 1 fügte man 0,5 Gewichtsteile Foamaster TCX, 27 Gewichtsteile Titandioxid, 16,4 Gewichtsteile Wasser, 0,1 Gewichtsteile Hydropalat 5300 und 10 Gewichtsteile Waterpoxy 751. Die Mischung wurde auf einen metallischen Untergrund in einer Schichtdicke von 30 µm aufgetragen und man ließ aushärten.

### Beispiel 4 (zum Vergleich)

Zu 100 Gewichtsteilen Waterpoxy 1422 fügte man 19 Teile Waterpoxy 751. Die Mischung wurde auf einen metallischen Untergrund in einer Schichtdicke von 30 µm aufgetragen und man ließ aushärten.

### Beispiel 5 (zum Vergleich)

Zu 53,0 Gewichtsteilen Waterpoxy 1422 fügte man 0,5 Gewichtsteile Foamaster TCX, 27 Gewichtsteile Titandioxid, 16,4 Gewichtsteile Wasser, 0,1 Gewichtsteile Hydropalat 5300, und 10 Gewichtsteile Waterpoxy 751. Die Mischung wurde auf einen metallischen Untergrund in einer Schichtdicke von 30 µm aufgetragen und man ließ aushärten.

Das Elastizitätsverhalten der ausgehärteten Beschichtungen gemäß den Beispielen 2 bis 4 wurde mittels Kugelschlagprüfung nach DIN 55995 ermittelt. Die erhaltenen Werte sind in Tabelle 1 zusammengestellt.

**Tabelle 1**

| Beispiel | Elastizitätsverhalten gemäß DIN 55995 [inch] |
|---|---|
| | |
| Beispiel 2 (erfindungsgemäß) | 70 |
| Beispiel 4 (zum Vergleich) | 20 |
| | |
| Beispiel 3 (erfindungsgemäß) | 50 |
| Beispiel 5 (zum Vergleich) | 5 |

## Patentansprüche

1. Wäßrige Beschichtungs-Zusammensetzungen mit einem Gehalt an härtbaren Komponenten bestehend aus
A) 0,5 bis 90 Gew.-% in Wasser selbstdispergierenden bei 20 °C festen Epoxidharzen,
B) 0,5 bis 90 Gew.-% (Meth)acrylsäureestern eines Polyols,
C) 5,0 bis 99,0 Gew.-% Wasser und
D) 0 oder 0,1 bis 3 Gew.-% organischer Lösungsmittel
mit folgenden Maßgaben:
• die (Meth)acrylsäureester B) enthalten mindestens 2 reaktionsfähige (Meth)acrylgruppen pro Molekül,
• die Summe der Gewichtsprozente der Komponenten A) bis D) ergibt 100 Gew.-% und
• die Viskosität der Zusammensetzung (gemessen nach Brookfield bei 23 °C) beträgt weniger als 15000 mPas.

2. Zusammensetzungen nach Anspruch 1, wobei die Wasserlöslichkeit der Komponente B) weniger als 0,1 g/l beträgt.

3. Verfahren zur Herstellung von Beschichtungen, wobei man eine Zusammensetzung bestehend aus
A) 0,5 bis 90 Gew.-% in Wasser selbstdispergierenden bei 20 °C festen Epoxidharzen,
B) 0,5 bis 90 Gew.-% (Meth)acrylsäureestern eines Polyols,
C) 5,0 bis 99,0 Gew.-% Wasser und
D) 0 oder 0,1 bis 3 Gew.-% organischer Lösungsmittel,
wobei folgende Maßgaben gelten:
• die (Meth)acrylsäureester B) enthalten mindestens 2 reaktionsfähige (Meth)acrylgruppen pro Molekül,
• die Summe der Gewichtsprozente der Komponenten A) bis D) ergibt 100 Gew.-% und
• die Viskosität der Zusammensetzung (gemessen nach Brookfield bei 23 °C) beträgt weniger als 15000 mPas,
mit
E) 1 bis 200 Gew.-% wasserverdünnbaren Härtern - Gew.-% Härter bezogen auf die Epoxidharze A) - und
F) 0 bis 90 Gew.-% weiterer Zusatzstoffe und/oder Verarbeitungshilfsmittel - Gew.-% der Komponente F) bezogen auf die Gesamtmenge der Komponenten A) bis F) -,
in Kontakt bringt, die Mischung in die gewünschte Form bringt und aushärten läßt.

4. Verwendung von Zusammensetzungen bestehend aus
A) 0,5 bis 90 Gew.-% in Wasser selbstdispergierenden bei 20 °C festen Epoxidharzen,
B) 0,5 bis 90 Gew.-% (Meth)acrylsäureestern eines Polyols,
C) 5,0 bis 99,0 Gew.-% Wasser und
D) 0 oder 0,1 bis 3 Gew.-% organischer Lösungsmittel,
wobei folgende Maßgaben gelten:
• die (Meth)acrylsäureester B) enthalten mindestens 2 reaktionsfähige (Meth)acrylgruppen pro Molekül,
• die Summe der Gewichtsprozente der Komponenten A) bis D) ergibt 100 Gew.-% und
• die Viskosität der Zusammensetzung (gemessen nach Brookfield bei 23 °C) beträgt weniger als 15000 mPas,
zur Herstellung von Beschichtungen.

## Claims

1. Water-based coating compositions containing curable components, **characterized in that** they consist of
A) 0.5 to 90% by weight epoxy resins which are solid at 20°C and self-dispersing in water,
B) 0.5 to 90% by weight (meth)acrylates of a polyol,
C) 5.0 to 99.0% by weight water and
D) 0 or 0.1 to 3% by weight organic solvent,
with the following provisos:
• the (meth)acrylates B) contain at least 2 reactive (meth)acrylic groups per molecule,
• the sum of the percentages by weight of components A) to D) is 100% by weight and
• the Brookfield viscosity of the composition (as measured at 23°C) is less than 15,000 mPas.

2. Compositions as claimed in claim 1, **characterized in that** the solubility of component B) in water is less than 0.1 g/l.

3. A process for the production of coatings, **characterized in that** a composition consisting of
A) 0.5 to 90% by weight epoxy resins which are solid at 20°C and self-dispersing in water,
B) 0.5 to 90% by weight (meth)acrylates of a polyol,
C) 5.0 to 99.0% by weight water and
D) 0 or 0.1 to 3% by weight organic solvent, with the following provisos:
• the (meth)acrylates B) contain at least 2 reactive (meth)acrylic groups per molecule,
• the sum of the percentages by weight of components A) to D) is 100% by weight and
• the Brookfield viscosity of the composition (as measured at 23°C) is less than 15,000 mPas.
is contacted with
E) 1 to 200% by weight water-dilutable hardeners - % by weight hardeners based on the epoxy resins A) and
F) 0 to 90% by weight other additives and/or processing aids - % by weight component F) based on the total quantity of all components,
and the resulting mixture is brought into the required shape and allowed to cure.

4. The use of compositions consisting of
A) 0.5 to 90% by weight epoxy resins which are solid at 20°C and self-dispersing in water,
B) 0.5 to 90% by weight (meth)acrylates of a polyol,
C) 5.0 to 99.0% by weight water and
D) 0 or 0.1 to 3% by weight organic solvent,
with the following provisos:
• the (meth)acrylates B) contain at least 2 reactive (meth)acrylic groups per molecule,
• the sum of the percentages by weight of components A) to D) is 100% by weight and
• the Brookfield viscosity of the composition (as measured at 23°C) is less than 15,000 mPas.
for the production of coatings.

## Revendications

1. Compositions aqueuses de revêtement ayant une teneur en composants durcissables, constituées de
A) 0,5 à 90 % en poids de résines époxy solides à 20°C auto-dispersables dans l'eau,
B) 0,5 à 90 % en poids d'esters d'acide (méth)acrylique avec un polyol,
C) 5,0 à 99,0 % en poids d'eau et
D) 0 ou 0,1 à 3 % en poids de solvants organiques
avec les conditions suivantes :
• les esters d'acide (méth)acrylique B) contiennent au moins 2 groupes (méth)acroyle réactifs par molécule,
• la somme des pourcentages en poids des composants A) à D) donne 100 % en poids et
• la viscosité de la composition (mesurée selon Brookfield à 23°C) est inférieure à 15 000 mPa.s.

2. Compositions selon la revendication 1,
**caractérisées en ce que**
la solubilité dans l'eau du composant B) est inférieure à 0,1 g/l.

3. Procédé pour la production de revêtements,
**caractérisé en ce qu'**
on met une composition constituée de
A) 0,5 à 90 % en poids de résines époxy solides à 20°C auto-dispersables dans l'eau,
B) 0,5 à 90 % en poids d'esters d'acide (méth)acrylique avec un polyol,
C) 5,0 à 99,0 % en poids d'eau et
D) 0 ou 0,1 à 3 % en poids de solvants organiques
avec les conditions suivantes :
• les esters d'acide (méth)acrylique B) contiennent au moins 2 groupes (méth)acroyle réactifs par molécule,
• la somme des pourcentages en poids des composants A) à D) donne 100 % en poids et
• la viscosité de la composition (mesurée selon Brookfield à 23°C) est inférieure à 15 000 mPa.s.
en contact avec
E) 1 à 200 % en poids de durcisseurs diluables à l'eau - % en poids de durcisseurs par rapport aux résines époxy A) - et
F) 0 à 90 % en poids d'autres additifs et/ou adjuvants de mise en oeuvre - % en poids des composants F) par rapport à la quantité totale des composants A) à F) -,
on met le mélange sous la forme désirée et on le laisse durcir.

4. Utilisation de compositions constituées de
A) 0,5 à 90 % en poids de résines époxy solides à 20°C auto-dispersables dans l'eau,
B) 0,5 à 90 % en poids d'esters d'acide (méth)acrylique avec un polyol,
C) 5,0 à 99,0 % en poids d'eau et
D) 0 ou 0,1 à 3 % en poids de solvants organiques
avec les conditions suivantes :
• les esters d'acide (méth)acrylique B) contiennent au moins 2 groupes (méth)acroyle réactifs par molécule,
• la somme des pourcentages en poids des composants A) à D) donne 100 % en poids et
• la viscosité de la composition (mesurée selon Brookfield à 23°C) est inférieure à 15 000 mPa.s.
pour la production de revêtements.
